# EUROPEAN PATENT APPLICATION

(11) **EP 4 242 591 A2**
(43) Date of publication of application: **13.09.2023**
(21) Application number: 23187133.6
(22) Date of filing: 18.12.2019
(51) Int. Cl.: G01C 21/34

(54) **GENERATING NAVIGATION ROUTES AND IDENTIFYING CARPOOLING OPTIONS IN VIEW OF CALCULATED TRADE-OFFS BETWEEN PARAMETERS**

(30) Priority: 28.06.2019 US 201962868856 P
(62) Divisional of application: 19839555.0
(71) Applicant: Google LLC, Mountain View, CA 94043 (US)
(72) Inventor: COHEN, Sarel, Mountain View, 94043 (US); GREENBERG, Merav, Mountain View, 94043 (US); MUKHIN, Ruslan, Mountain View, 94043 (US); PETREANU, Yigal, Mountain View, 94043 (US); ROYZ, Moriah, Mountain View, 94043 (US); WISEMAN, Leora, Mountain View, 94043 (US)
(74) Representative: Morrall, Jonathan Ian McLachlan

(57) **Abstract**

A technique for generating navigation routes includes obtaining route data indicative of multiple routes between respective starting locations and destinations, previously traversed by a user (702). The technique further includes identifying, using map data, route segments of a first type and at least one other type within the multiple routes, to generate route segment data (704) and determining, using the route data and the route segment data, a quantitative metric to measure a trade-off between a property of route segments of the first type route and a property of route segments of the at least one other type in selection of navigation routes by the user (706). After an indication of a starting location and a destination is received (708), the technique includes generating a navigation route between the starting location and the destination for the user, including applying the quantitative metric to constrain selections of route segments (710).

## Description

### FIELD OF THE DISCLOSURE

The present disclosure relates to navigation systems and, more particularly, to calculating and applying a quantitative metric indicative of trade-offs between parameters in navigation decisions of a user.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Today, numerous electronic devices such as personal computers, tablets, mobile phones, special-purpose navigators, etc. provide digital maps of geographic areas and step-by-step directions for navigating between geographic locations. Navigation services can provide navigation directions, and in some cases relevant digital maps, via special-purpose software applications such as mapping and navigation applications as well as via general-purpose software applications such as web browsers. In addition to driving directions, navigation services can provide walking directions, public transportation directions, bicycling directions, etc.

Navigation services typically receive a request for navigation directions from a user and generate a navigation route according to a certain predetermined order of factors, such as time or distance. More particularly, a navigation service can generate several candidate navigation routes and present these candidates in the order of ascending total distance or total travel time. A navigation server attempts to optimize a navigation route for time, i.e., generate a route that requires the least amount of time, or optimize the navigation route for distance, i.e., identify the shortest route available. In some cases, a navigation service generates candidate navigation routes and provides additional controls for identifying navigation routes with segments matching a certain criterion, e.g., toll collection. These indications are binary and thus merely indicate whether a navigation route, or a portion of that route, satisfies the criterion.

However, navigation services do not generate navigation routes that reflect, in a quantitative manner, relationships between parameters of navigation routes in the user's past selections of navigation routes or other navigation decisions.

### SUMMARY

Generally speaking, a system of this disclosure is configured to generate, for a user, a quantitative metric to measure a trade-off between route segments of one type ("target type") and route segments of another type, and apply this quantitative metric when generating navigation directions (more particularly, navigation routes from a starting location to a destination). To generate the quantitative metric, the system can process indications of past navigation routes traversed by the user. For example, for a certain starting location and a certain destination, the system can determine that the user followed a navigation route with *N* kilometers route segments of the target type, and that an alternative navigation route without any route segments of this type would have required extra *M* minutes. The system can use this instance as an example of the user choosing the trade-off of *N* kilometers of route segments of the target type for *M* minutes of time. Using multiple instances of similar calculations, the system can generate a quantitative metric to predict probable trade-offs the user will choose in the future. The system then can use this metric as a constraint in generating navigation routes for the user or an autonomous vehicle, and thus better optimize these routes for a set of requirements.

The system can output one or more of the navigation routes to a device for display to a user. In other implementations, the system can provide the navigation route to the controller of an autonomous vehicle.

The system in some implementations can dynamically adjust the quantitative metric in view of other contextual signals. For example, the system can determine that a time constraint (e.g., an appointment at the destination at a certain known time) can outweigh or override the constraint based on the quantitative metric.

In some implementations, the system can train a machine learning model using indications of multiple navigation paths the user traversed, indications of which route segments correspond to the type for which the user potentially applies a trade-off, and potentially other signals. As a more specific example, when training the machine learning model, the system can apply a feature in which selecting route segments of the target function is a function of reducing travel time.

One particular example of the target type to which the system can apply the techniques of this disclosure is the difficulty level of the route segment. The system can estimate the difficulty level using such signals as feedback from drivers, the number of accidents reported over a period of time, an analysis of road geometry (e.g., a sharp turn, an intersection of more than two roads, narrow lanes), indications of road types (e.g., dirt roads), etc. Another example of the target type is the estimated fuel emissions generated by a vehicle traversing the route segment, which may be related to the road surface type or road speed for the route segment, for example. Another example of the target type is the requirement to pay a toll to traverse the route segment. The system in this case can determine an approximate financial cost of an extra unit of time (e.g., one minute) for a route segment, when alternatives are available, and determine whether the quantitative metric for a user is above or below this cost.

Further, the system of this disclosure can implement additional features such as providing a cumulative assessment of the navigation route based on the route segments of the target type. For example, the system can provide an overall financial cost of a navigation route by estimating the one or more tolls associated with the navigation route, the overall difficulty of the navigation route, or the overall cost of fuel. The system can use these cumulative assessments in ranking candidate navigation routes, for example. As another example of such features, the system can automatically identify situations in which carpooling sufficiently reduces the overall financial cost of a navigation route which the system otherwise would not recommend to the user in view of the quantitative metric calculated for the user. For example, using a high-occupancy vehicle (HOV) lane could reduce time and/or cost.

One example embodiment of the techniques of this disclosure is a method for generating navigation routes, which can be executed by processing hardware such as one or more processors of a navigation server. The method includes obtaining route data indicative of multiple routes between respective starting locations and destinations, previously traversed by a user; identifying, using map data, route segments of a first type and at least one other type within the multiple routes, to generate route segment data; and determining, using the route data and the route segment data, a quantitative metric to measure a trade-off between a property of route segments of the first type route and a property of route segments of the at least one other type in selection of navigation routes by the user. When an indication of a starting location and a destination is received, the method includes generating a navigation route between the starting location and the destination for the user, including applying the quantitative metric to constrain selections of route segments.

Another example embodiment is a system including one or more processors and a computer-readable memory. The memory stores instructions that, when executed by the one or more processors, cause the system to obtain route data indicative of multiple routes between respective starting locations and destinations, previously traversed by a user. The instructions further cause the system to identify, using map data, route segments of a first type and at least one other type within the multiple routes, to generate route segment data, and determine, using the route data and the route segment data, a quantitative metric to measure a trade-off between route segments of the first type route and route segments of the at least one other type in selection of navigation routes by the user. When an indication of a starting location and a destination is received, the instructions cause the system to generate a navigation route between the starting location and the destination for the user, including applying the quantitative metric to constrain selections of route segments.

### BRIEF DESCRIPTION OF THE DRAWINGS

Fig. 1 is a block diagram of a system in which techniques for generating navigation routes in view of trade-offs between parameters can be implemented;
Fig. 2A is a block diagram of a subsystem in which a trade-off controller is configured to rank candidate navigation routes, which can operate as a component of the system of Fig. 1;
Fig. 2B is a block diagram of a subsystem in which a route generator including a trade-off controller generates ranked candidate navigation routes, which can operate as a component of the system of Fig. 1;
Fig. 3 is a flow diagram of an example method for generating ranked candidate navigation routes in view of one or more quantitative metrics indicative of trade-offs between parameters, which can be implemented in the system of Fig. 1;
Fig. 4 schematically illustrates segmentation of a navigation route for the purposes of calculating the overall toll, which the system of Fig. 1 can implement;
Fig. 5 is a block diagram of an example machine learning model which the system of Fig. 1 can utilize to generate quantitative metrics indicative of trade-offs between parameters;
Fig. 6A is an example user interface screen which the geographic application illustrated in Fig. 1 can generate to provide a toll estimate for a certain navigation route;
Fig. 6B is an example user interface screen which the geographic application illustrated in Fig. 1 can generate to provide respective toll estimates for multiple alternative navigation routes;
Fig. 6C is another example user interface screen which the geographic application illustrated in Fig. 1 can generate to provide a toll estimate for a certain navigation route;
Fig. 6D is an example user interface screen which the geographic application illustrated in Fig. 1 can generate to provide respective toll estimates for multiple alternative navigation routes;
Fig. 6E is an example user interface screen which the geographic application illustrated in Fig. 1 can generate to provide toll and high-occupancy-vehicle (HOV) payment information;
Fig. 6F is an example user interface screen which the geographic application illustrated in Fig. 1 can provide to the user for adjusting trade-off settings;
Fig. 7 is a flow diagram of an example method for generating a navigation route between a starting location and a destination using a quantitative metric indicative of a trade-off between parameters, which can be implemented in the system of Fig. 1;
Fig. 8A is a flow diagram of an example method for generating a signal for potential carpool matching based on differences in cost between single-driver and HOV scenarios, which can be implemented in the system of Fig. 1;
Fig. 8B schematically illustrates route options including a detour that involves carpooling;
Fig. 8C is a flow diagram of an example method for estimating the cost of a detour in accordance with the options illustrated in Fig. 8B, which the system of Fig. 1 can implement; and
Fig. 9 is a flow diagram of an example method for generating reminders related to toll roads, which can be implemented in the system of Fig. 1.

### DETAILED DESCRIPTION

The present disclosure describes techniques for calculating and applying a quantitative metric indicative of trade-offs between parameters in navigation decisions of a user, as well as other techniques for generating navigation directions. As discussed below, the quantitative metric can indicate how a geographic service should generate navigation routes parameterized by time, distance, difficulty, cost, etc. in view of the significance of a parameter relative to another parameter. The geographic service can determine this metric automatically or in accordance with explicit user input.

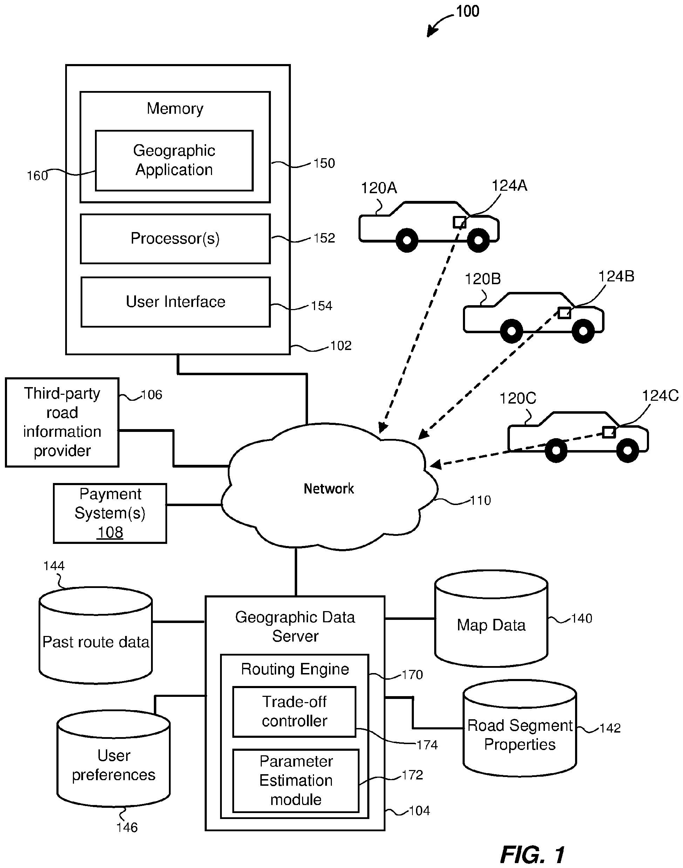

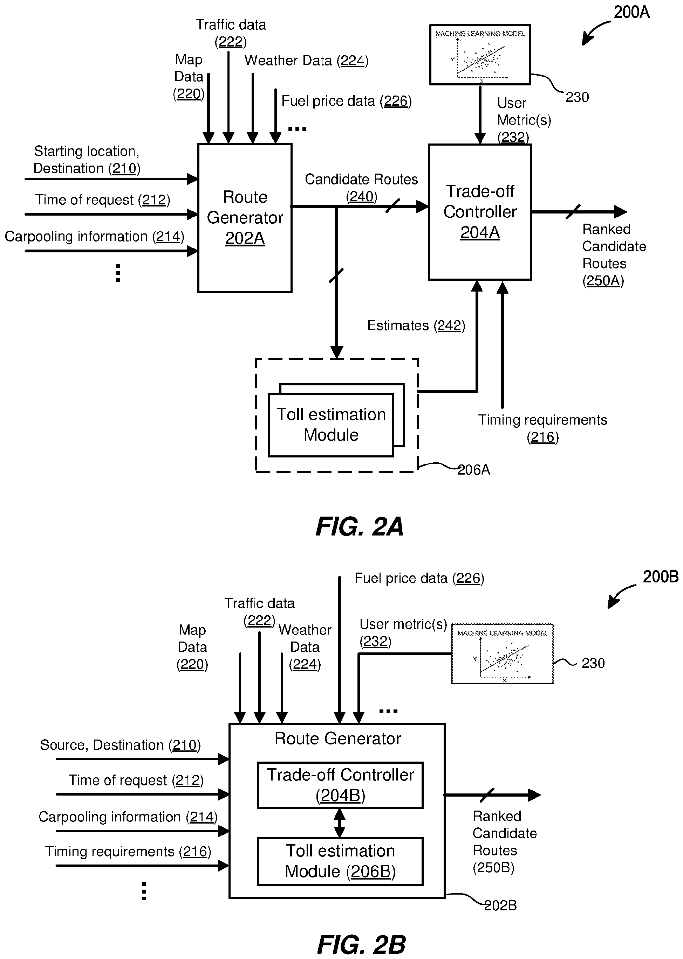

An example communication system 100 that can implement these techniques is discussed first with reference to Fig. 1, followed by a discussion of example subsystems in which a trade-off controller generates and ranks candidate navigation routes, with reference to Figs. 2A and 2B.

The communication system 100 includes a client computing device 102 which can be, for example, a personal computer, a portable device such as a tablet computer or smartphone, wearable computing device, a special-purpose car navigator, a device embedded in a head unit of a vehicle, etc. The communication system 100 in general can include any suitable number of client computing devices.

The communication system 100 further includes one or more geographic data servers 104 operated by a provider of mapping and navigation services. The server 104 can provide map data and navigation data to the client computing device 102 and other client devices. The communication system 100 in general can include any suitable number of providers of content and/or databases related to transportation, such as providers of scheduling and routing information for trains, buses, ferries, etc.

Still further, the communication system 100 can include a third-party road information provider 106, which can provide toll information (e.g., rates for various vehicle types, times of day, days of the weeks, occupancy levels) for certain locations to the server 104, as well as a payment system 108, with which the server 104 can communicate to facilitate toll payments, check payment status, manage subscriptions, etc.

The server 104 can be communicatively coupled to a map database 140 that stores map data for various geographic areas. The map data can specify the shapes and various properties of geographic features such as roads, buildings, lakes, rivers, parks, etc. The map data can conform to any suitable format such as vector graphics, rasterized images, text for labels, etc. and organized according to any suitable principle (e.g., square map tiles covering the same amount of area at a certain zoom level). The map data also can include street-level imagery and photographs taken from various vantage points. Further, map data for a geographic area can include information about brick-and-mortar businesses located at the respective locations within the geographic area: hours of operation, description of products and services, user reviews, etc.

The server 104 is coupled also to a road segment properties database 142 that stores, for various road segments S₁, S₂, etc. indications of certain properties such as for example the level of difficulty as reported by various drivers based on individual experiences or determined based on the number of accident reports. In some implementations, the road segment properties database 142 stores toll information for certain segments. A record in the database 142 for example can indicate that traversing a road segment Sᵢ requires a payment. Depending on the scenario, the record can indicate different amounts for different types of vehicles, times of day, days of the week, etc. The record also can identify the authority that collects the toll, the type of payment (e.g., manual, electronic, camera-based), the availability of HOV discounts, etc. Further, the record can indicate a rule that applies to the calculation, as discussed in more detail below. The database 142 can delimit road segments in any suitable manner, such as by the locations of toll booths and/or automatic toll collectors, nearby road entrances or exits, coordinates of the Global Positioning System (GPS), etc.

Further, the server 104 is coupled to a past routes database 144 which stores anonymized trajectories for multiple users, each of which can be a time series made up of position/time tuples. In some implementations, a user operates certain controls and/or installs certain applications to indicate that the server 104 may use his or her past routes data to determine the user's preferences regarding navigation, including a quantitative metric indicative of how the user assesses trade-offs between parameters of route segments.

As a more specific example, the data in the database 144 can indicate that a user travels between locations L₁ and L₂ along a navigation route that includes several toll segments Sₜₒₗₗ₁, Sₜₒₗₗ₂, ... S_{tollN}, and that the user spends an average time *T* to traverse the navigation route. Using this data along with the map database 140 and possibly other sources of relevant data (e.g., traffic data), the geographic data server 104 can determine that an alternative navigation route between the L₁ and L₂ includes no toll segments but requires on average a different amount of time, T', to traverse. The geographic data server 104 accordingly can compare the overall toll with the difference between the times T and T'.

Further, the database 144 in some cases stores more explicit signals indicative of past selections of navigation routes by the user. For example, the user can request navigation directions to a destination, receive several candidate navigation routes from the geographic data server 104, such that one candidate navigation route incudes tolls but requires less time while another candidate navigation route does not includes tolls but requires more time, and explicitly choose a navigation route from among these candidates. In general, users can choose to provide the database 144 with indications of past navigation routes in any suitable format, in connection with navigation routes they explicitly requested and selected or unrelated to requested navigation routes (e.g., when users choose to share their location data).

The user preferences database 146 can store additional preferences reported by users. For example, a user can configure her personal profile to indicate that she prefers to avoid tolls. Moreover, in some implementations of the system 100 she further specifies a rule based on which the server 104 generates a quantitative metric for the trade-off between road parameters. For example, the user can operate the client computing device 102 to explicitly specify that she values each *N* minutes of saved time at no more than *X* dollars in toll payments.

More particularly, the client computing device 102 can include processing hardware such as one or more processors 152, a non-transitory memory 150 (e.g., a hard disk, a flash drive to implement persistent and/or non-persistent storage components), and a user interface 154 that can include any suitable combination of input devices such as a touchscreen, a keyboard, a microphone, etc. and output devices such as screens, speakers, etc. The memory 150 stores instructions that implement a geographic application 160 configured to receive navigation routes and other navigation data from the server 104 and provide navigation directions including the navigation routes via the user interface 154. The geographic application 160 in various implementations also can provide interactive digital maps, positioning information, etc. The client computing device 102 also can include various sensors (not shown to avoid clutter) such as a global positioning system (GPS) module to detect the position of the client computing device 102, a compass to determine the direction of the client computing device 102, a gyroscope to determine the rotation and tilt, an accelerometer, etc.

In some scenarios, the client device 102 is coupled to the head unit of a vehicle to operate in the so-called projected mode. More particularly, the client device 102 can provide output via a touchscreen built into the head unit, the speakers in the vehicle, etc., and accordingly receive input via the touchscreen, a microphone built into the head unit, etc. The client device 102 and the head unit can communicate via a short-range wired or wireless communication link such as a Universal Serial Bus (USB) link, Bluetooth^{®} or another suitable wireless personal area network (WPAN) link, WiFi^{®} or another suitable wireless local area network (WLAN) link, etc.

With continued reference to Fig. 1, the server 104 implements crowdsourcing techniques and receives indications of road segment properties from drivers. For example, drivers of vehicles 120A, 120B, 120C, etc. can report tolls they encounter using portable devices (e.g., via geographic applications 124A, 124B similar to the geographic application 160) or using components 124C built into the corresponding vehicles. More generally, the server 104 can receive information regarding road segment properties from any suitable sources such as third-party feeds, sensors installed on roads, imaging software that processes imagery captured by client devices or dashboard cameras to identify road signs or electronic toll collection (ETC) installations, etc.

The server 104, the third-party road information provider 106, and the payment system 108 can interconnect via a network 110, which can be a wide area network such as the Internet, for example, and include wired and/or wireless communication links. The client computing device 102 also can access the server 104 via the network 110, and the vehicles 120A, 120B, 120C and/or portable devices operating in these vehicles can access the server 104 via the network 110.

As illustrated in Fig. 1, the server 104 can include a routing engine 170 including a parameter estimation module 172 and a trade-off controller 174. In operation, the module 172 generates estimates for various road segments or paths including road segments. For example, the module 172 can estimate the financial cost of traversing several road segments associated with toll collection, or estimate the overall difficulty of route that includes several segments for which drivers reported difficulties in the past. The routing engine 170 generates navigation routes for specified starting locations and destinations using the trade-off controller 174 to constraint selection of navigation routes in view of a relationship between road parameters (e.g., time and difficulty, time and cost).

For further clarity, Figs. 2A and 2B illustrate several example implementations of a subsystem that includes a trade-off controller. The components of these subsystems can be implemented using hardware, software, firmware, or any suitable combination of hardware, software, and firmware.

Referring first to Fig. 2A, a subsystem 200 includes a trade-off controller 204A and a toll estimation module 206A coupled to a route generator 202A. The route generator 202A and the toll estimation module 206A can operate as the trade-off controller 174 and the parameter estimation module 172, respectively, and the other modules illustrated in Fig. 2A also can operate as components of the routing engine 170 of Fig. 1. As discussed in more detail below, the trade-off controller 204A is configured to rank candidate navigation routes which the route generator 202A outputs.

In particular, the route generator 202A receives signals describing a user request for navigation directions, including for example a starting location and a destination signal 210, a time of request 212, carpooling information 214, etc. The route generator 202A also receives signals not specific to the user such as for example map data 220, traffic data 222, weather data 225, fuel price data 226 (in the event the route is sufficiently long to require one or more refills of the gas tank), etc. In general, the route generator 202A can use fewer signals or, conversely, any number of additional signals such as the fuel status of the user's vehicle, the locations of gas stations, fuel consumption, etc. The trade-off controller 204A receives as input timing requirements 216 associated with the request for navigation directions (e.g., "must arrive at the destination no later than 3:00 pm"), candidate routes 240 which the route generator 202A outputs, and estimates 242 which the toll estimation module 206A generates based on the candidate routes 240. Further, the subsystem 200A can utilize a user preferences machine learning model 230 to estimate one or more quantitative metrics for the user, such as a quantitative metric to measure the trade-off between road difficulty and time, or the amount of toll(s) and time. The user preferences machine learning model 230 provides one or more metrics to the trade-off controller 204A as an additional input 232, in this example implementation. The trade-off controller 204A generates ranked candidate routes 250A based on the candidate routes 240 and in view of the user metric 232.

In operation, the route generator 202A can generate several candidate navigation routes R₁, R₂, ... R_{N} between the starting location and the destination specified by the signal 210. To this end, the route generator 202A can apply any suitable technique for identifying a path between locations using descriptions of real-world geography (provided in the map data 220) and attempt to optimize the candidate navigation routes R₁, R₂, ... R_{N} in terms of time or distance, for example. The route generator 202A can account for real-time factors such as traffic (using the signal 222) to optimize the routes specifically for the time of the request (signal 212). In some implementations, the route generator 202A also applies the fuel price data 226 and the carpooling information 214 as additional weights to identify the candidate routes.

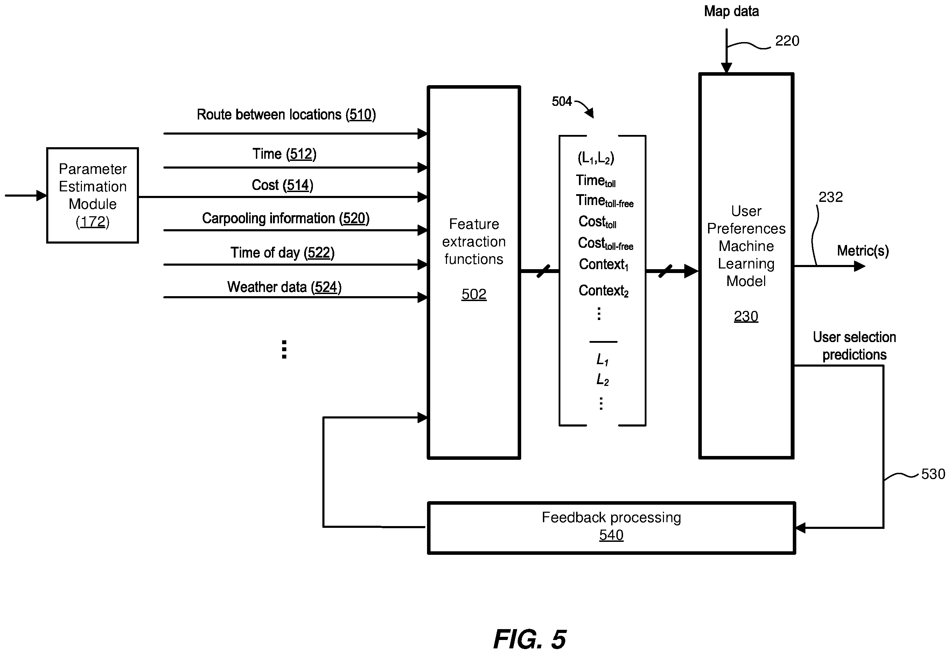

The user metric 232 output by the user preferences machine learning model 230 can indicate the probable weight of a certain parameter (e.g., route difficulty, cost) specifically measured against another parameter (e.g., time). Thus, for example, the machine learning model 230 can generate a user metric 232 to indicate that the user values *N* minutes of saved time at *X* dollars. The machine learning model 230 can generate this signal based on a set of various signals related to the navigation paths the user traversed earlier, as discussed in more detail below with reference to Fig. 5. Alternatively, another component generates the input 232 algorithmically (e.g., by calculating the ratio between a certain number of tolls and the corresponding number of minutes saved). As yet another alternative, a software application such as the geographic application 160 can generate the user metric 232 based on user input.

In some implementations, the model 230 generates a set of context-specific metrics as a part the user metric 232. For example, the model 230 can generate one metric for a trade-off between time and cost when the user traverses relatively long paths (e.g., 50 miles or more), and another metric for the trade-off between time and cost when the user traverses relatively short distances. These multiple metrics can better reflect, for a certain example user, the preference to reduce the cost when the trip is long on the one hand, and the preference to reduce the time when the trip is short on the other hand. As another example, the model 230 can generate one metric for a trade-off between time and route difficulty when the user drives in daylight and another metric for the trade-off between time and route difficult when the user drivers at nighttime. A certain user for example can prefer to avoid driving on accident-prone route segments when it is dark, but the same user does not mind driving on similar route segments in daytime (or when the sky is not overcast).

Fig. 2B illustrates a subsystem 200B that is generally similar to the subsystem 200A, but in this implementation a route generator 202B includes a toll estimation module 206B and a trade-off controller 204B. The route generator 202B and the toll estimation module 206AB can operate as the trade-off controller 174 and the parameter estimation module 172, respectively, and the other modules illustrated in Fig. 2B also can operate as components of the routing engine 170 of Fig. 1. Unlike the implementation of Fig. 2A, the trade-off controller 204B and the toll estimation module 206B operate as components of the route generator 202B to generate ranked candidate routes 250B. In other words, the route generator 202B in this implementation uses the output of the trade-off controller 204B to select and rank candidate routes 250B.

In some scenarios, the model 230 cannot produce a user-specific metric 232 due to lack of data for the user. The trade-off controller 134A or 134B in these cases can use the preferences of other users to determine the initial value of the user metric. For example, the trade-off controller 134A or 134B can determine that for a certain starting location and a certain destinations, 76% of the users prefer the faster route to the cheaper route, and initially set the metric 232 to this value.

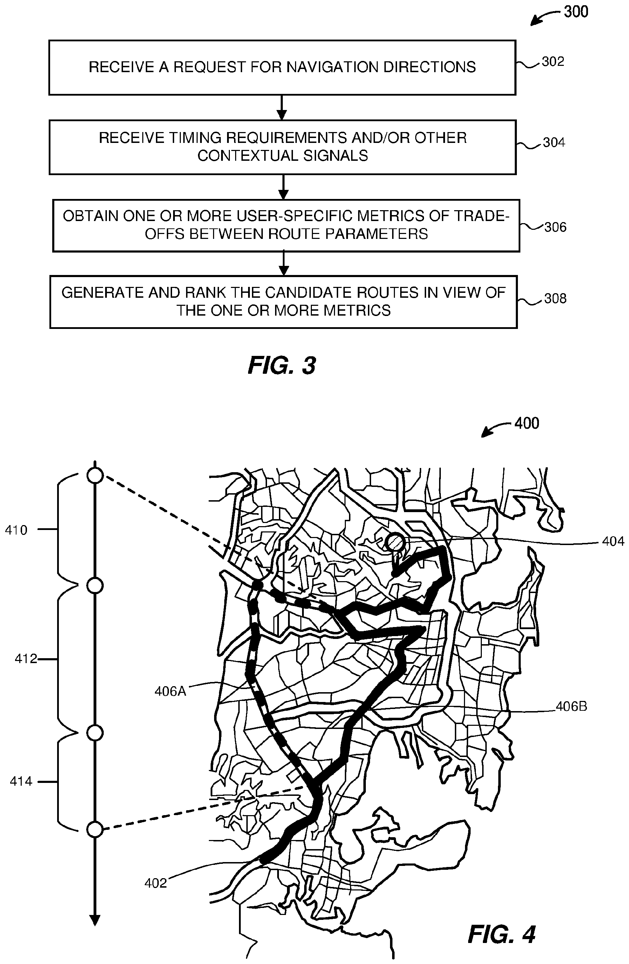

Now referring to Fig. 3, an example method 300 for generating ranked candidate navigation routes in view of one or more quantitative metrics indicative of trade-offs between parameters can be implemented in the geographic data server 104 or another suitable device or group of devices (for convenience, this method is discussed below with reference to the geographic data server 104). The method 300 can be implemented as a set of instructions executable by processing hardware such as one or more processors.

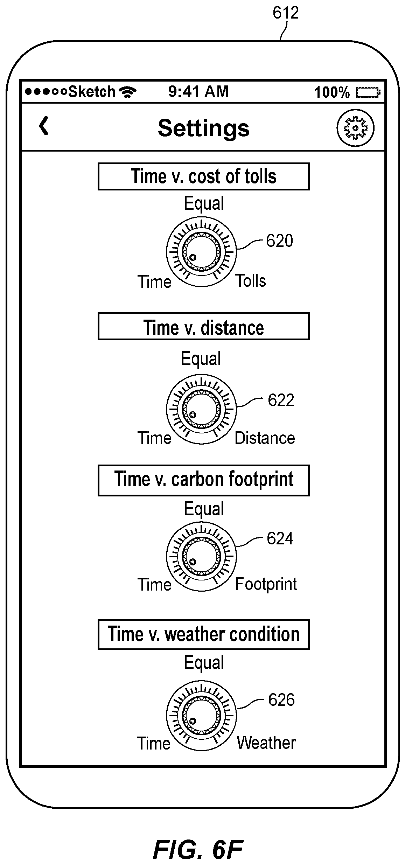

At block 302, the geographic data server 104 receives a request for navigation directions. The request can indicate the starting location and the destination, in any suitable format (e.g., a point of interest, an address, GPS coordinates). In some scenarios, the client device 102 generates a request for navigation directions when the user explicitly or implicitly (e.g., by selecting a point-of-interest on an interactive map) submits an initial request for navigation directions. In other scenarios, the client device 102 periodically, or in response to an event such as a quick reduction is speed due to or an accident, generates an updated request for navigation directions while the client computing device 102 is following previously received navigation directions. Further, the user of the client device 102 in some cases can choose to add another stop to the route or otherwise modify the route, and the client device 102 accordingly can transmit an updated request including the new parameters to the geographic data server 104. Still further, the user can choose to modify one or more trade-offs (e.g., increase the importance of safe routes over time because it has gotten dark), as discussed more with reference to Fig. 6F.

Next, at block 304, the geographic data server 104 receives timing requirements, such as the required time of arrival, and/or other contextual signals such as the potential presence of carpooling partners for example.

Next, at block 306, the geographic data server 104 obtains one or more user-specific quantitative metrics of trade-offs between route parameters. As discussed above, this quantitative metric can measure how one parameter such as time relates to another parameter such as cost. In other words, the geographic data server 104 can constrain the selection of a navigation route by a function that expresses one parameter in terms of another parameter. The geographic data server 104 then generates and ranks the candidate routes in view of the one or more metrics, at block 308. The geographic data server 104 then can transmit the ranked candidate routes to a device, such as client computing device 102, for display to a user, for example by the geographic application 160.

Fig. 4 schematically illustrates segmentation of a navigation route 406A between a starting location 402 and a destination 404 for the purposes of calculating the overall toll, which the parameter estimation module 172 of Fig. 1 or another suitable module can implement. The navigation route 406A requires a certain amount of time T₁ to traverse and includes several sections associated with tolls, in particular sections 410, 412, and 414. Fig. 4 also illustrates an alternative route 406B between the same starting location 402 and the same destination 404. The alternative route 406B includes no sections associated with toll collection, but requires on average more time (T₂) to traverse.

In some scenarios, the server 104 generates descriptions of the navigation routes 406A and 406 using information in the map database 140 and the road segment properties database 142. When the past routes data 144 includes indications of a user traversing the navigation route 406A and/or the navigation route 406B, the server 104 can compare the times T₁ and T₂, as well as the respective toll payments, if any, for the navigation routes 406A and 406B. The server 104 can use these differences as one of the data points when calculating a quantitative metric that measures the trade-off between the cost and time for the user.

To determine the overall cost of the segments 410, 412, and 414, the estimation module 172 can select the applicable pricing model. As one example, the estimation module 172 can apply a fixed-tolls model according to which there is a respective fixed cost associated with each of the segments 410, 412, and 414. When the estimation module 172 applies an incremental-toll model, the overall amount the user should expect to pay changes in accordance with how much time the user spends on the road and/or how many consecutive segments the driver traverses. Thus, for example, the cost of traversing the segments entire route 406A, including the sequence of segments 410, 412, and 414, can be higher than the sum of the costs of traversing each of the segments 410, 412, and 414 individually.

Further, the estimation module 172 in some cases can apply a dynamic-toll model according to which the cost depends on traffic conditions at a particular time. As a more particular example, the toll for the segment 410 for example can increase with an increase in traffic, and accordingly decrease with a decrease in traffic. Further, the toll can change depending on whether there are multiple passengers in the user's vehicle (e.g., decrease when the user participates in carpooling).

Still further, the estimation module 172 can estimate amounts of toll in view of additional signals such as types of vehicles (e.g., different amounts for different car sizes, lower or even no tolls for hybrid or electric cars, lower or no tolls for motorcycles, higher tolls for trucks); special permits and/or subscriptions to payment services some users may have; days of the week (e.g., lower tolls on weekends), time of day, special dates such as holidays, etc.

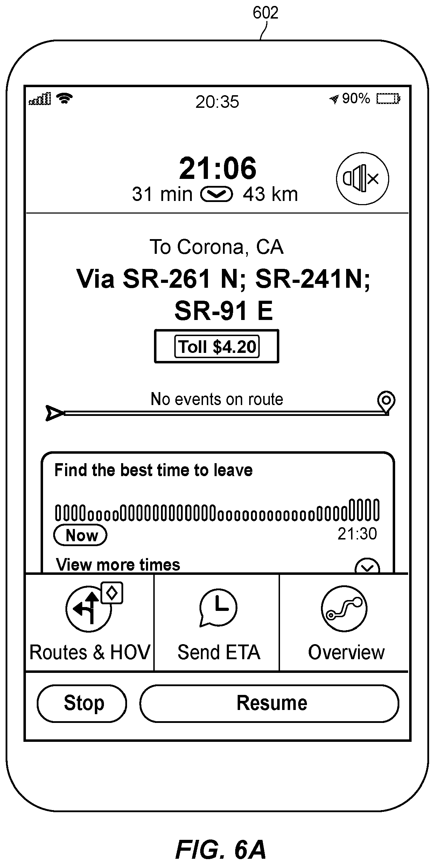

In any case, the estimation module 172 in the example of Fig. 4 can generate an estimate of a toll payment for the navigation route 406A, and the geographic application can display the estimated total of the tolls via the user interface 154 (see Fig. 6A), when the navigation route 406A corresponds to a user request for navigation directions. On the other hand, the estimation module 172 similarly can estimate the total amount of tolls when the navigation route 406A correspond is a route the user previously traversed (see Fig. 5 below).

Although the scenario of Fig. 4 involves only tolls collected on roads, in general the estimation module 172 can generate estimates for other modes of travel as well as for multi-modal navigation routes. One example of such multi-modal navigation directions includes a segment traversed by car and another segment where the vehicle is transported by a ferry. Other examples can include navigation directions according to which the user of the client device 102 traverses a portion of the route using public transportation and another portion on foot, drives a portion of the route and traverses another portion using public transportation, covers a portion of the route on bicycle and another portion on foot, etc. In these cases, the estimation module 172 can apply any suitable combination of models discussed above.

Now referring to Fig. 5, the routing engine 170 in some implementations trains the user preferences machine learning model 230 (which can provide a user metric to a trade-off controller as illustrated in Figs. 2A and 2B) using various input signals, the corresponding labels, user feedback data, etc. The routing engine 170 can receive various inputs from the past routes database 144 as training data and apply this data to the model 230, via feature extraction functions 502.

For example, the feature extraction functions 502 can receive a route between locations (signal 510), an indication of time when the user traversed the route (signal 512), an estimation of the overall cost of the route (signal 514), carpooling information indicative of whether the user used HOV lanes, HOV pricing, etc. when traversing the route (signal 520), the time of day at which the user traversed the route (signal 522), the weather at the time the user traversed the route (signal 524), etc. The feature extraction functions 502 can receive the signals 510, 512, 520, 522, 524, etc. as a part of the data describing past routes traversed by the user. To generate the estimated cost signal 514, the parameter estimation module 172 can apply a suitable toll calculation technique such as those discussed above with reference to Fig. 4. In other scenarios, the cost signal 514 corresponds to the amount reported by the user. More generally, the feature extraction functions 502 can receive any number of parameters related directly to the route or the context in which the travel occurred.

To more efficiently train the model 230 (i.e., to converge on reliable predicted values more quickly), the feature extraction functions 502 in an example implementation generates a feature vector 504 that accounts for the relationship between the time parameters time and cost parameters (rather than, or in addition to, accounting for the time parameter and the cost parameter separately). The feature extraction functions 502 thus can be regarded as training the model 230 using a function *F*(cost, time). The feature vector 504 in this particular example is a vector including as elements the starting location and the destination (L₁, L₂) tuple, the time associated with traveling between the locations L₁ and L₂ using a navigation route that includes tolls, the cost associated with traveling between the locations L₁ and L₂ using a navigation route that includes tolls, the time associated with traveling between the locations L₁ and L₂ using a navigation route that does not include tolls, the cost associated with traveling between the locations L₁ and L₂ using a navigation route that does not include tolls, and contextual signals such as the time of travel for example. The feature vector 504 can include labels such as indications of whether the user chose the navigation route with tolls or the toll-free route.

The routing engine 170 can train the model 230 using multiple instances of the feature vector 504 as well as map data 220 and/or other data common to all users. The routing engine 170 can generate the quantitative metric 232 to measure the trade-off between time and cost. The model 230 also can generate predictions 530 of which navigation route the user will select in the future from among several candidate routes. A feedback processing 540 can assess the quality of the predictions 530 (e.g., by processing an indication of which option the user selected subsequent to the prediction) and provide feedback data to the feature extraction functions 502 to continue training the model 230.

In some implementation, the model 230 also estimates, based on the past route data for the user, the amount the user likely will pay for toll in the future during a certain period of time. The geographic data server 104 can automatically compare this estimate with the price of a pass or subscription received from the payment system 108, and in some cases generate a suggestion for the user to subscribe to a toll payment plan. More generally, the model 230 can generate a prediction based on which the server 104 can determine the most optimal arrangement for toll roads, for the user.

Fig. 6A is an example user interface screen 602 which the geographic application 160 can generate to provide a toll estimate for a navigation route. As illustrated in Fig. 6A, the user interface screen 602 includes an indication of the overall estimated toll the driver should expect to pay on the way to the destination. Rather than merely providing an indication that the navigation route includes tolls, the geographic data server 104 estimates the overall cost of the route (using the techniques discussed with reference to Fig. 4, for example) and provides this estimate to the geographic data server 104 for display via the user interface 154.

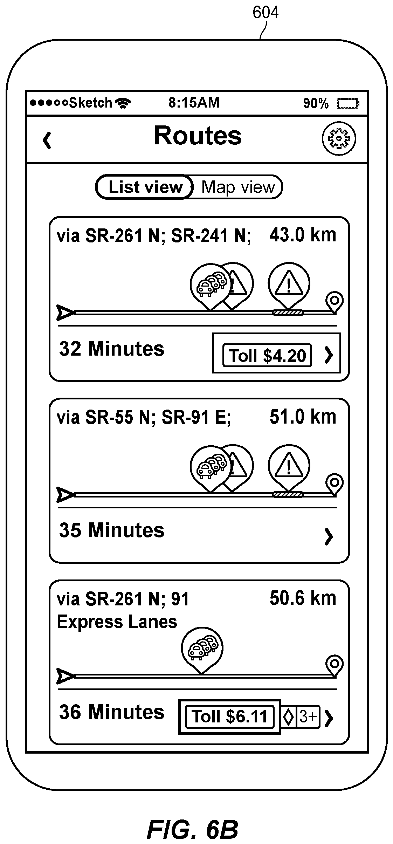

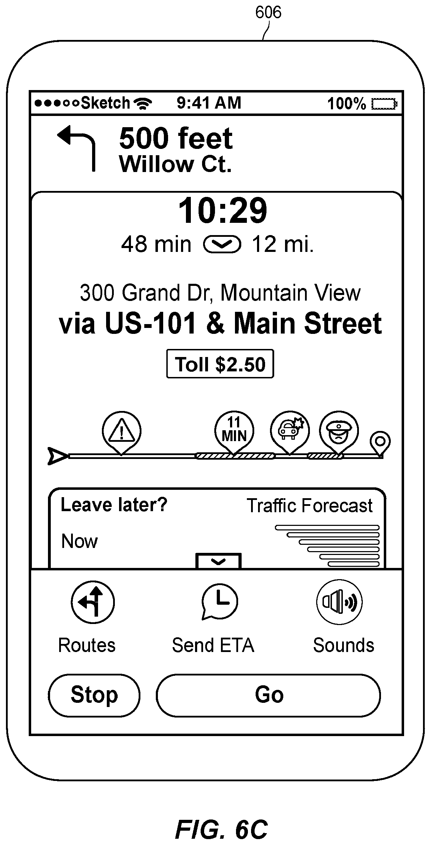

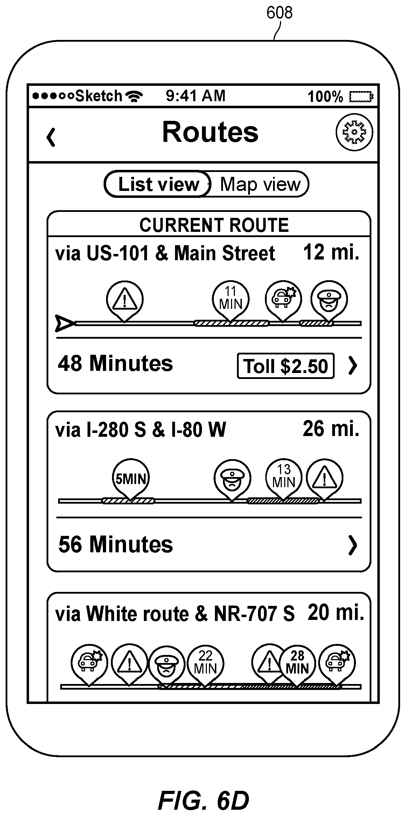

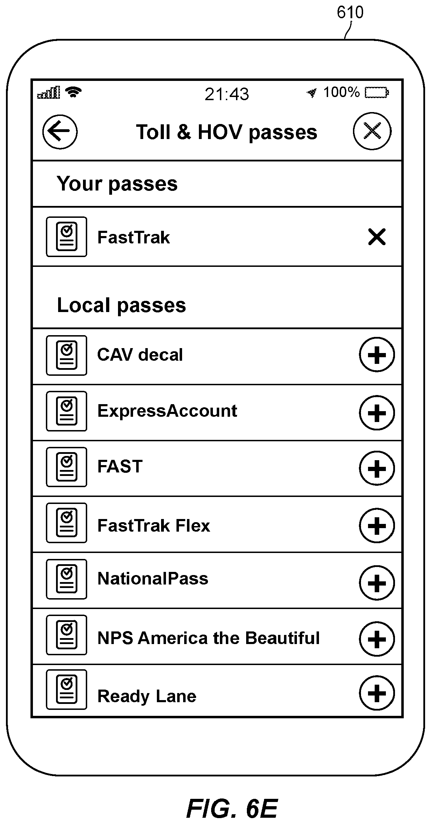

An example user interface screen 604 of Fig. 6B includes respective toll estimates for multiple alternative navigation routes. As illustrated in Fig. 6B, the third candidate navigation route includes an HOV option for three or more people in the vehicle. Fig. 6C illustrates another example user interface screen 606 which the geographic application 160 can generate to provide a toll estimate for a certain navigation route, and Fig. 6D is an example user interface screen 608 which the geographic application 160 can generate to provide respective toll estimates for multiple alternative navigation routes. Fig. 6E is an example user interface screen 610 which the geographic application 160 can generate to provide toll and high-occupancy-vehicle (HOV) payment information.

Referring to Fig. 6F, the geographic application 160 can generate a user interface screen 612 including interactive controls 620-626 via which the user can specify his or her preferences with respect to trade-offs. In this example implementation, the user can adjust the numerical representation of the trade-off between time and cost of tolls, time and distance, time and carbon footprint, time and driving under difficult weather conditions. More generally, the geographic application 160 can provide trade-off controls for any pair of parameters of route segments (or groups of three or more parameters). In this example implementation, the user can rotate a virtual knob to specify the importance of one parameter relative to another parameter. The user in the scenario illustrated in Fig. 6 operated the virtual knob 620 to specify that time is significantly more important than tolls. The user can rotate the virtual knob 620 counter-clockwise to make time even more significant than tolls or, conversely, rotate the virtual knob 620 clockwise to specify that time is equal in importance to tolls or that tolls are more important than time. The virtual knobs 620-626 in general can allow the user to specify any number of intermediate values, with any desirable degree of granularity.

When the geographic application 160 provides the user interface screen 612 to the user, the geographic application 160 can obtain the initial setting for each of the virtual knobs 620-626 based on the quantitative metrics the geographic data server 104 generates using indications of past navigation routes traversed by the user. For example, the trade-off controller 204A ca generate one or more metrics 232 and provide these metrics to the geographic application 160 executing on the client device 102. The geographic application 160 then can display the knobs 620-626 with the initial settings corresponding to these metrics. The user can accept these settings or manually modify one or more of the settings and thereby adjust the quantitative metrics of the corresponding trade-offs. The geographic application 160 then can transmit the new quantitative metrics to the geographic data server 104.

The geographic application 160 can provide the user interface screen 612 before the user submits a request for navigation directions or in connection with a specific navigation route. In the latter case, the geographic application 160 can determine which of the knobs 620-626 to display, and with which initial settings in view of the context of the request. As indicated above, the trade-off controller 134 can apply different metrics of a trade-off between the same pair of parameters in view of the length of the route, time of day, day of the week, the number of passengers in the car, whether the user's calendar includes an event at the destination location, etc.

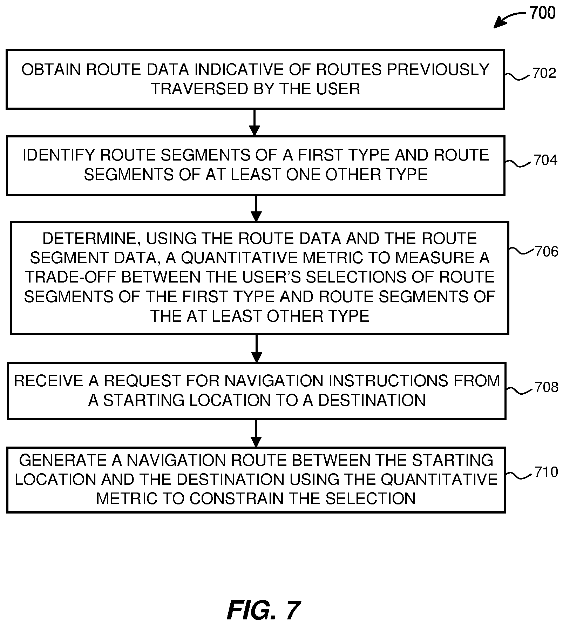

Next, several example methods which the geographic data server 104 and/or the geographic application 160 can implement are discussed next with reference to Figs. 7-9.

Referring first to Fig. 7, the routing engine 130 can implement an example method 700 for generating a navigation route between a starting location and a destination using a quantitative metric indicative of a trade-off between parameters.

At block 702, the routing engine 130 obtains route data indicative of routes previously traversed by the user. To this end, the routing engine can use the past routes database 144. For a certain route, the route data can specify the starting location, the destination, the sequence of route segments between the starting location and the destination, etc. The route data in some cases also includes indications of the context with which the route is associated, e.g., the time of day at which the user travelled along the route, the day of the week, the presence or absence of passengers, etc.

Next, at block 704, the routing engine 130 identifies route segments of a certain type as well as segments of at least one other type. For example, the routing engine 130 can identify route segments that are difficult due to the geometry (e.g., lanes narrower than average by a certain percentage, road curvature above a certain threshold, angle at which streets converge at an intersection smaller than a certain threshold value) as well as lanes that are not difficult, to define the first type and another type, respectively. As another example, the routing engine 130 can identify route segments that are associated with tolls as well as route segments that are toll-free.

At block 706, the routing engine 130 can use the route data and the route segment data to generate a quantitative metric of the trade-off between selecting route segments of these different types. The trade-off can correspond to properties of the resulting navigation routes such as the overall time, cost, difficulty, etc. As a more particular example, the quantitative metric of the trade-off can be a function *F₁* of route difficulty the user tends to accept to save time, *F₁* (difficulty, time). As another example, the quantitative metric of the trade-off can be a function *F₂* of cost the user is willing to pay to similarly reduce the time of travel, *F₂* (difficulty, time). The routing engine 130 can implement machine learning techniques such as those discussed with reference to Fig. 5, a suitable algorithm, or explicit user input to generate the quantitative metric. More generally, the quantitative metric can describe the relationship between any pair of properties of navigation routes.

Next, at block 708, the routing engine 130 receives a request for navigation instructions from a certain starting location to a destination. In various scenarios the request can include additional signals such as a timing restriction for example. The routine engine 130 then generates a navigation route at block 710. The routing engine 130 applies the quantitative metric to constrain the selection of the navigation route. For example, as discussed above with reference to Figs. 2A and 2B, the routing engine can generate candidate navigation routes and use a trade-off controller to generate a ranking of the candidate navigation routes in view of the quantitative metric, or use a trade-off controller to apply the quantitative metric along with other signals to generate candidate navigation routes.

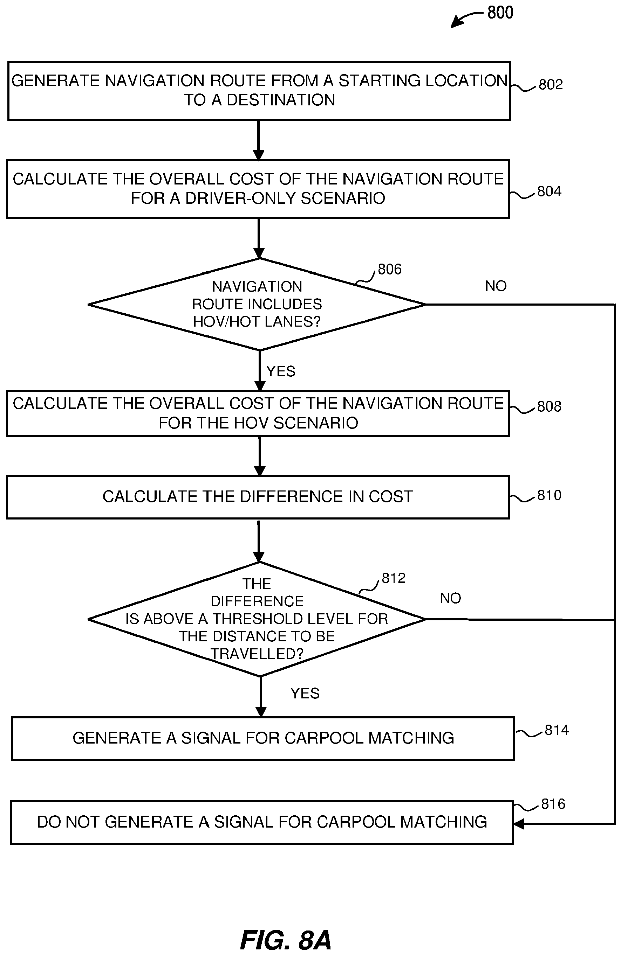

Now referring to Fig. 8A, the geographic data server 104 can implement a method 800 for generating a signal for potential carpool matching based on differences in cost between single-driver and HOV scenarios. The method 800 begins at block 802, where the server 104 generates a navigation route from a starting location to a destination. The server 104 then calculates the overall cost of the navigation route at block 804, according to the assumption that the user is driving alone. At block 806, the server 104 determines whether the navigation route includes HOV lanes and, if so, the flow proceeds to block 808. Otherwise, the flow proceeds directly to block 816.

At block 808, the server 104 calculates the overall cost of the navigation route, this time according to the assumption that the user's vehicle becomes a high-occupancy vehicle. The server 104 calculates, at block 810, the difference between the cost estimates calculated at blocks 804 and 808. If the server 104 determines at block 812 that the difference exceeds a certain threshold value, the flow proceeds to block 814; otherwise, the flow proceeds to block 816. At block 814, the server 104 generates a signal for potential carpool matching. For example, the server 104 can generate a suggestion for the user indicating the amount by which the cost of the route can decrease in the event the user participates in carpooling. In some implementations, the server 104 at block 812 can apply a quantitative metric indicative of a relationship between several parameters rather than simply rely on the difference in cost.

The server 104 can perform the method 800 multiple times, for various candidate navigation routes and/or various candidate carpool companions. Thus, for example, the server 104 can identify two or more candidate routes that would involve carpooling and that are advantageous relative to single-driver route in terms of time or cost. The server 104 then can select a suggested navigation route from among these candidates.

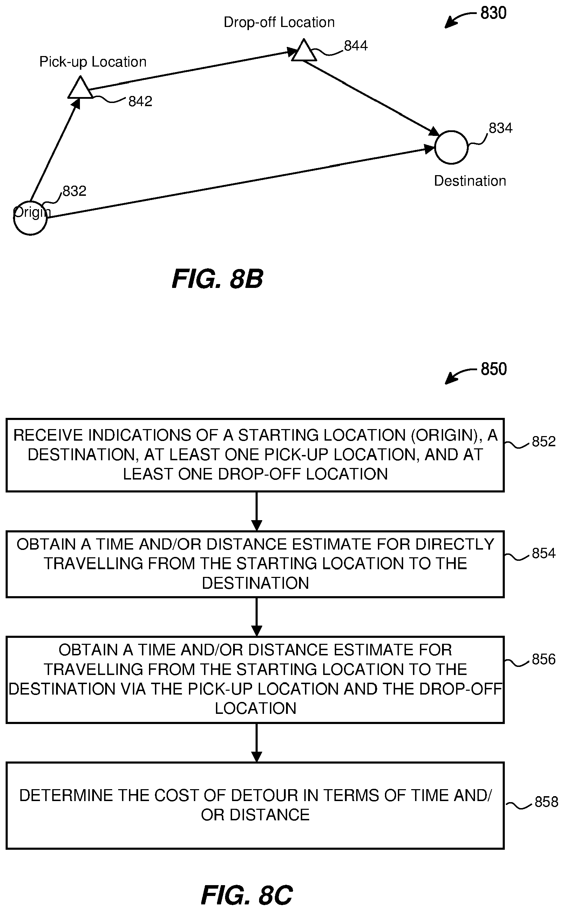

Next, an example method for estimating the cost of a detour in terms of time or distance is discussed with reference to Fig. 8C and the schematic representation of several route options of Fig. 8B. According to an example scheme 830 of Fig. 8B, a user can travel between an origin 832 and a destination 834 directly (along route *R_{D}*) or indirectly via one or more pick-up and drop-off locations (along route *R_{I}*). In this example, the user can travel from the origin 832 to a pick-up location 842 to pick up a passenger, drop off the passenger at a drop-off location 844, and continue on to the destination 834. More generally, the indirect route *R_{I}* can include any suitable number of pick-up locations and drop-off locations.

For each of the direct and indirect routes *R_{D}* and *R_{I}*, the routing engine 170 can determine one or more of the distance between the origin 832 and the destination 834, the travel time between the origin 832 and the destination 834, the cost of travelling between the origin 832 and the destination 834, etc. The routing engine 170 can use these estimates to assess trade-offs between direct routes and indirect routes that involve carpooling.

Referring to Fig. 8C, the routing engine 170 can implement an example method 850 as a set of instructions executable by processing hardware such as one or more processors. For convenience, this method is discussed below with reference to the geographic data server 104 and, more particularly, the routing engine 170.

The method 850 begins at block 852, where the routing engine 170 receives an indication of a starting location (or origin), a destination, at least one pick-up location, and at least one drop-off location. For example, the routing engine 170 can receive addresses, coordinates, or any other suitable indications of the locations 832, 834, 842, and 844. The routing engine 170 in general can receive indications of the locations 842 and 844 from any suitable source such as a rideshare service via which users can request rides. As one such example, a rideshare service operating independently of the routing engine 170 can provide to the routing engine 170, via an appropriate API, a request to find a rideshare match for a trip between the pick-up location 842 and the drop-off location 844, within a certain period of time. The routing engine 170 can determine whether the user traveling between the locations 832 and 834 has indicated his or her desire to participate in ridesharing, and then determine the trade-offs associated with the detour via the locations 842 and 844 as discussed above. In some implementations, the routing engine 170 performs this analysis only if the driver and the potential rideshare companions are within a certain distance of each other on the social graph.

As another example, the routing engine 170 can determine that two users with certain proximity in the social graph are about to travel to proximate destinations from proximate starting locations, within a certain period of time of each other. To this end, the routing engine 170 checks whether the two users have indicates their willingness to participate in carpooling.

As a more specific example, a user planning to travel from the origin 832 to the destination 834 can configure his or her profile to indicate a preference for potential carpool matching. Referring back to Fig. 6F, the geographic application 160 can present to the user an interface generally similar to the virtual knobs 620, 622, etc. to specify the trade-off between cost and carpooling. Thus, for example, a user can indicate a general preference for riding alone, where carpooling becomes an acceptable option when the savings amount to at least 30% relative to riding alone. In another implementation, the user simply indicates whether he or she is willing to consider carpooling. Further, the user can place a limit on the proximity of rideshare companions on the social graph.

The routing engine 170 in one example implementation estimates the direct travel time T_{D} between the origin and the destination, at block 854. Next, at block 856, routing engine 170 estimates the indirect travel time T_{I} between the origin the destination via the pick-up location(s) and the drop-off location(s). The routing engine 170 in another implementation estimates the direct travel distance D_{D} and the indirect travel distance Di instead of, or in addition to, the travel times. More generally, the routing engine 170 can generate any suitable quantitative metrics for comparing the direct and indirect routes *R_{D}* and *R_{I}*.

At block 858, the routing engine 170 determines the cost of the detour C_{DETOUR} via the pick-up location and the drop-off location using the estimates determined at blocks 854 and 856. In one example implementation, the routing engine 170 calculates the difference and/or ratio between T_{D} and T_{I} or between D_{D} and Di, for example. In another example implementation, the routing engine 170 calculates the ratio between T_{D} and T_{I}, between D_{D} and Di, etc. To calculate the cost of tolls when the user is carpooling, the routing engine 170 can apply a model different from the model suitable for an individual driver.

In either case, the routing engine 170 then can use the determined cost of the C_{DETOUR} to determine whether the geographic data server 104 should generate a signal for potential carpool matching. In those scenarios where the routing engine 170 generates this signal, the geographic data server 104 can provide an indication of potential carpool companions to the user. The routing engine 170 in some implementations also automatically generates notifications for the potential carpool companions, and the user can request, via the geographic application 160 for example, that the routing engine 170 transmit these notifications to the identified potential carpool companions.

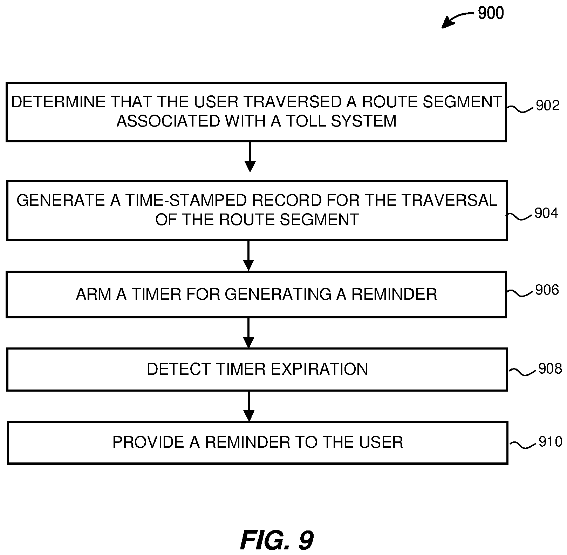

Fig. 9 is a flow diagram of an example method 900 which the geographic application 160 can implement to generate reminders related to toll roads. At block 902, geographic application 160 can determine that the user traversed a route segment associated with a toll system. For example, the user of the client computing device 102 can operate certain controls to allow the geographic application 160 to determine the user's current location. As a more specific example, the geographic application 160 can receive navigation instructions from the server 104 and determine that the user has reached a segment associated with a toll while displaying the navigation route over an interactive digital map.

At block 904, the geographic application 160 can generate a time-stamped record of the traversal of the toll segment. The geographic application 160 can store the record in the memory 150. The geographic application 160 at block 906 also can arm a timer (e.g., one hour, three hours, ten hours) to generate a reminder to pay the toll. The geographic application 160 can adjust the timer period based on the time of day to prevent late-night or early-morning notifications, for example. At block 908, the geographic application 160 detects timer expiration and, at block 910, provides a reminder to pay the toll.

Alternatively, the geographic application 160 can automatically contact the payment system 108 via the network 110 and electronically submit a payment. The geographic application 160 can contact the payment system 108 in real time (i.e., at the time when the user's vehicle traverses the route segment with a toll or according to a fixed schedule, for example).

### Additional considerations

The following additional considerations apply to the foregoing discussion. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter of the present disclosure.

Additionally, certain embodiments are described herein as including logic or a number of components, modules, or mechanisms. Modules may constitute either software modules (e.g., code stored on a machine-readable medium) or hardware modules. A hardware module is a tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term hardware should be understood to encompass a tangible entity, be that an entity that is physically constructed, permanently configured (e.g., hardwired), or temporarily configured (e.g., programmed) to operate in a certain manner or to perform certain operations described herein. As used herein "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The methods 800 and 900 may include one or more function blocks, modules, individual functions or routines in the form of tangible computer-executable instructions that are stored in a non-transitory computer-readable storage medium and executed using a processor of a computing device (*e.g.,* a server device, a personal computer, a smart phone, a tablet computer, a smart watch, a mobile computing device, or other client computing device, as described herein). The methods 800 and 900 may be included as part of any backend server (e.g., an augmented reality server, a ridesharing server, a map data server, a navigation server, or any other type of server computing device, as described herein), client computing device modules of the example environment, for example, or as part of a module that is external to such an environment. Though the figures may be described with reference to the other figures for ease of explanation, the methods 800 and 900 can be utilized with other objects and user interfaces. Furthermore, although the explanation above describes steps of the methods 800 and 900 being performed by specific devices (such as an augmented reality server 110, a driver client device 10, or a rider client device 28), this is done for illustration purposes only. The blocks of the methods 800 and 900 may be performed by one or more devices or other parts of the environment.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations or devices.

The one or more processors may also operate to support performance of the relevant operations in a "cloud computing" environment or as an SaaS. For example, as indicated above, at least some of the operations may be performed by a group of computers (as examples of machines including processors), these operations being accessible via a network (e.g., the Internet) and via one or more appropriate interfaces (*e.g*., APIs).

Also disclosed herein are the following numbered clauses:
1. A method for generating navigation routes, the method comprising:
   obtaining, by processing hardware, route data indicative of a plurality of routes between respective starting locations and destinations, previously traversed by a user;
   identifying, by the processing hardware using map data, route segments of a first type and at least one other type within the plurality of routes, to generate route segment data;
   determining, by the processing hardware using the route data and the route segment data, a quantitative metric to measure a trade-off between a first property of the route segments of the first type route and a second property of route segments of the at least one other type in selection of navigation routes by the user;
   receiving, by the processing hardware, an indication of a starting location and a destination; and
   generating, by the processing hardware a navigation route between the starting location and the destination for the user, including applying the quantitative metric to constrain selections of route segments.
2. The method of clause 1, wherein determining the quantitative metric includes determining an amount of time by which a first route the user travelled between a pair of locations differs from a second route the user travelled between the pair of locations, wherein the first route includes route segments of the first type and the second route does not include route segments of the second type.
3. The method of clause 1 or 2, further comprising:
   receiving, by the processing hardware, a time constraint parameter indicative of a time by which the user must arrive at the destination;
   wherein generating the navigation route includes applying the time constraint parameter to further constrain selections of route segments.
4. The method of any of the preceding clauses, further comprising:
   receiving, by the processing hardware, a carpooling parameter indicative of whether carpooling is available to the user between the starting location and the destination;
   wherein generating the navigation route includes applying the carpooling parameter to further constrain selections of route segments.
5. The method of any of the preceding clauses, further comprising:
   receiving, by the processing hardware, a time-of-travel parameter indicative of a time at which the user is to travel between the starting location and the destination;
   wherein generating the navigation route includes applying the time-of-travel parameter to further constrain selections of route segments.
6. The method of any of the preceding clauses, further comprising:
   training, by the processing hardware, a machine learning model using the route data and the route segment data, the machine learning model configured to generate candidate routes between specified locations.
7. The method of any of the preceding clauses, wherein determining the quantitative metric includes:
   providing, via a user interface of a computing device, an interactive control to specify the trade-off between route segments of the first type and route segments of the at least one other type; and
   receiving the quantitative metric via the interactive control provided in the user interface.
8. The method of any of the preceding clauses, further comprising:
   in response to determining that the route data is insufficient for determining the quantitative metric without additional data, determining the quantitative metric further using indications of other users' preferences regarding the first property and the second property, for routes between the starting location and the destination.
9. A computing system comprising:
   one or more processors; and
   a computer-readable memory storing thereon instructions that, when executed by the one or more processors, cause the computing system to:
      obtain route data indicative of a plurality of routes between respective starting locations and destinations, previously traversed by a user,
      identify, using map data, route segments of a first type and at least one other type within the plurality of routes, to generate route segment data,
      determine, using the route data and the route segment data, a quantitative metric to measure a trade-off between a first property of the route segments of the first type route and a second property of route segments of the at least one other type in selection of navigation routes by the user,
      receive an indication of a starting location and a destination, and
   generate a navigation route between the starting location and the destination for the user including applying the quantitative metric to constrain selections of route segments.
10. The computing system of clause 9, wherein to determine the quantitative metric, the instructions cause the system to determine an amount of time by which a first route the user travelled between a pair of locations differs from a second route the user travelled between the pair of locations, wherein the first route includes route segments of the first type and the second route does not include route segments of the second type.
11. The computing system of clause 8 or 9, wherein the instructions further cause the system to:
   receive a time constraint parameter indicative of a time by which the user must arrive at the destination, and
   to generate the navigation route, the instructions cause the system to apply the time constraint parameter to further constrain selections of route segments.
12. The computing system of any of clauses 9-11, wherein the instructions cause the system to:
   receive a carpooling parameter indicative of whether carpooling is available to the user between the starting location and the destination, and
   wherein to generate the navigation route, the instructions cause the system to apply the carpooling parameter to further constrain selections of route segments.
13. The computing system of any of clauses 9-12, wherein the instructions further cause the system to:
   receive a time-of-travel parameter indicative of a time at which the user is to travel between the starting location and the destination,
   wherein to generate the navigation route, the instructions apply the time-of-travel parameter to further constrain selections of route segments.
14. The computing system of any of clauses 9-13, wherein the instructions further cause the system to:
   train a machine learning model using the route data and the route segment data, the machine learning model configured to generate candidate routes between specified locations.
15. The computing system of any of clauses 9-14, wherein to determine the quantitative metric, the instructions cause the system to:
   provide, via a user interface of a computing device, an interactive control to specify the trade-off between route segments of the first type and route segments of the at least one other type; and
   receive the quantitative metric via the interactive control provided in the user interface.

## Claims

1. A method for generating navigation routes, the method comprising:
obtaining (702), by processing hardware (152), route data (144) indicative of a plurality of routes between respective starting locations and destinations, previously traversed by a user;
applying (706) a machine learning model (230) trained using the route data to generate a first quantitative metric (232) for a trade-off between a first route parameter and a certain route parameter, for the user driving in daylight;
applying the machine learning model to generate a second quantitative metric (232) for a trade-off between the first route parameter and the second route parameter, for the user driving at nighttime; and
receiving (708), by the processing hardware, an indication of a starting location and a destination; and
generating (710) a navigation route between the starting location and the destination for the user, including applying the first or second quantitative metric to constrain selections of route segments.

2. The method of claim 1, wherein:
the first route parameter is time; and
the second route parameter is route difficulty.

3. The method of claim 1 or 2, further comprising:
receiving, by the processing hardware, a time constraint parameter indicative of a time by which the user must arrive at the destination;
wherein generating the navigation route includes applying the time constraint parameter to further constrain the selections of route segments.

4. The method of any of the preceding claims, further comprising:
receiving, by the processing hardware, a carpooling parameter indicative of whether carpooling is available to the user between the starting location and the destination;
wherein generating the navigation route includes applying the carpooling parameter to further constrain the selections of route segments.

5. The method of any of the preceding claims, further comprising:
receiving, by the processing hardware, a time-of-travel parameter indicative of a time at which the user is to travel between the starting location and the destination;
wherein generating the navigation route includes applying the time-of-travel parameter to further constrain the selections of route segments.

6. The method of any of the preceding claims, further comprising:
providing, via a user interface of a computing device, an interface control to specify an additional trade-off between time and cost of tolls;
wherein generating the navigation route further includes using the additional trade-off.

7. The method of any of the preceding claims, further comprising:
providing, via a user interface of a computing device, an interface control to specify an additional trade-off between time and a carbon footprint;
wherein generating the navigation route further includes using the additional trade-off.

8. The method of any of the preceding claims, further comprising:
providing, via a user interface of a computing device, an interface control to specify an additional trade-off between time and a difficulty of weather conditions;
wherein generating the navigation route further includes using the additional trade-off.

9. The method of any of the preceding claims, further comprising:
providing, via a user interface of a computing device, an interface control to specify an additional trade-off between time and a distance;
wherein generating the navigation route further includes using the additional trade-off.

10. A computing system comprising:
one or more processors (152); and
a computer-readable memory (150) storing thereon instructions that, when executed by the one or more processors, cause the computing system to perform a method of any of the preceding claims.
